# EUROPÄISCHE PATENTSCHRIFT

(11) **EP 0 875 695 B1**
(45) Veröffentlichungstag und Bekanntmachung des Hinweises auf die Patenterteilung: **27.11.2002**
(21) Anmeldenummer: 98106929.7
(22) Anmeldetag: 16.04.1998
(51) Int. Cl.: F16G 13/16

(54) **Energieführungskette zum stationären Führen von Leitungen**
Supporting chain for energy carriers for stationary supporting of carriers
Chaîne porteuse de lignes de transport d'énergie pour le support stationnaire de lignes

(30) Priorität: 21.04.1997 DE 19716695
(43) Veröffentlichungstag der Anmeldung: 04.11.1998
(73) Patentinhaber: Kabelschlepp Gesellschaft mit beschränkter Haftung, 57074 Siegen (DE)
(72) Erfinder: Wehler, Herbert, 57290 Neunkirchen (DE)
(74) Vertreter: Kahlhöfer, Hermann, Dipl.-Phys.

(56) Entgegenhaltungen:
- EP-A- 0 260 740
- WO-A-93/05556
- WO-A-96/35887
- DE-A- 1 817 593
- FR-A- 2 583 852

## Beschreibung

Die Erfindung betrifft gemäß Oberbegriff des Anspruchs 1 eine Energieführungskette zum stationären Führen von Leitungen, mit Kettengliedern, die räumlich relativ zueinander auslenkbar sind.

Aus der WO 96/35887 ist eine derartige Energieführungskette bekannt. Sie dient zum stationären Führen von Leitungen zwischen zwei ortsfesten Anschlußstellen und besteht aus mehreren gelenkig miteinander verbundenen Kettengliedern. Jedes Kettenglied weist wenigstens einen sich in Richtung der Energieführungskette erstreckenden Führungsabschnitt auf, der durch wenigstens eine Wandung begrenzt ist. Die Führungsabschnitte bilden einen Führungskanal, in dem Leitungen anordenbar sind. Die Wandung ist über wenigstens einen Steg mit einem Zentralkörper verbunden, wobei die Zentralkörper nach der WO 96/35887 durch Gelenkverbindungen miteinander verbunden sind, so daß benachbarte Kettenglieder räumlich relativ zueinander auslenkbar sind. Energieführungsketten dieser Art sind auch durch die WO 93/05556 und die EP 0 260 740 A2 bekannt.

Aufgrund der Ausgestaltung der bekannten Energieführungsketten zum räumlichen Führen von Leitungen ist eine Verlegung entlang einer vorgegebenen Verlegelinie ohne Stützelementen, die die jeweiligen Kettenglieder mit einer An- oder Auflagefläche verbinden, nur begrenzt möglich. Insbesondere kommt es bei einer horizontalen Verlegung der gelenkig miteinander verbundenen Kettenglieder zu einem Durchhängen des zwischen zwei Auflagepunkten liegenden Abschnitts der Energieführungskette. Ein solches Durchhängen wird aus ästhetischen Gründen als nachteilig angesehen, insbesondere dann, wenn die Energieführungskette zum Führen von Leitungen im Bürobereich verwendet wird.

Hiervon ausgehend, liegt der vorliegenden Erfindung die Aufgabe zugrunde, die bekannte Energieführungskette so weiterzubilden, daß diese mit geringer Abweichung von einer vorgegebenen Verlegelinie ohne zusätzlicher Stützstellen verlegbar ist.

Diese Aufgabe wird erfindungsgemäß durch eine Energieführungskette mit den Merkmalen des Anspruchs 1 gelöst. Vorteilhafte Weiterbildungen sind Gegenstand der Unteransprüche.

Die erfindungsgemäße Energieführungskette weist Kettenglieder auf, die jeweils wenigstens einen sich in Längsrichtung der Energieführungskette erstreckenden Führungsabschnitte aufweisen. Der Führungsabschnitt eines jeden Kettengliedes ist durch wenigstens eine Wandung begrenzt, die über wenigstens einen Steg mit einem Zentralkörper verbunden ist. Die Kettenglieder sind durch Gelenkverbindungen miteinander verbunden, so daß die benachbarten Kettenglieder räumlich relativ zueinander auslenkbar sind. Bei der erfindungsgemäßen Energieführungskette ist die räumliche Auslenkbarkeit wenigstens zweier Kettenglieder mindestens teilweise sperrbar. Durch diese Sperrung wird ein im wesentlichen starrer Abschnitt der Energieführungskette erreicht, der wenigstens zwei Kettenglieder umfaßt. Hierdurch kann die Energieführungskette mit geringer Abweichung und ohne zusätzlicher Stützstellen entlang einer vorgegebenen Verlegelinie verlegt werden. Insbesondere, wenn die Energieführungskette horizontal zwischen zwei Auflagepunkten, die im Abstand zueinander liegen, verlegt werden soll, können die zwischen den Auflagepunkten liegenden Kettenglieder gesperrt werden, so daß der zwischen den Auflagepunkten liegende Abschnitt der Energieführungskette sich wie ein starres Rohr verhält. Hierdurch wird ein Durchhängen der Kettenglieder zwischen den Auflagepunkten vermieden.

Dadurch, daß die räumliche Auslenkbarkeit wenigstens zweier Kettenglieder sperrbar ist, können auch gekrümmte Abschnitte ausgebildet werden, so daß die in der Energieführungskette verlegten Leitungen dem durch die Kettenglieder vorgegebenen Krümmungsradius folgen, wodurch die Beanspruchung der Leitungen, insbesondere die Bruchgefahr von elektrischen Leitungen, verringert wird. Die erfindungsgemäße Energieführungskette vereinigt in sich die Vorteile eines starren Kanals sowie die Vorteile einer flexiblen Verlegung von Leitungen.

Um die Auslenkbarkeit wenigstens zweier Kettenglieder zu sperren, wird die Verwendung wenigstens eines Sperrorgans vorgeschlagen. Vorzugsweise ist das Sperrorgan mit der jeweiligen Wandung wenigstens zweier Kettenglieder verbindbar. Das Sperrorgan ist starr ausgebildet. Diese Ausgestaltung der Energieführungskette hat den Vorteil, daß die Auslenkbarkeit wenigstens zweier Kettenglieder mit konstruktiv einfachen Mitteln verhinderbar ist.

Zur Festlegung des Sperrorgans an den Kettengliedern wird vorgeschlagen, daß die Wandung wenigstens zweier Kettenglieder, vorzugsweise eines jeden Kettengliedes wenigstens einen Halter aufweist. Der Halter ist vorzugsweise an einer Außenseite der Wandung ausgebildet. Durch diese Ausgestaltung ist es möglich, wenigstens zwei Kettenglieder starr miteinander zu verbinden unabhängig davon, ob Leitungen in den Führungsabschnitten der Kettenglieder verlegt worden sind oder nicht. Diese bevorzugte Ausgestaltung eignet sich insbesondere dann, wenn die Energieführungskette vorkonfektioniert, d. h. bereits mit den Leitungen bestückt worden ist, vor Ort verlegt werden soll, so daß eine Anpassung der Energieführungskette an die vorgegebene Verlegelinie mit einfachen Mitteln verwirklicht werden kann. Das Sperrorgan kann im wesentlichen stabförmig ausgebildet sein. Es kann mit mehreren Kettengliedern verbunden sein. Das Sperrorgan kann im wesentlichen geradlinig ausgebildet sein. Soll die Energieführungskette einen im wesentlichen gekrümmten Abschnitt aufweisen, so wird vorgeschlagen, daß das Sperrorgan wenigstens einen abgewinkelten Abschnitt aufweist. Hat das Sperrorgan mehrere relativ zueinander abgewinkelte Abschnitte, so bilden die mittels des Sperrorgans miteinander verbundenen Kettenglieder einen Polygonzug, der quasi einen gekrümmten Abschnitt der Energieführungskette bildet. Durch entsprechende Ausformung des Sperrorgans sind neben Polygonzügen in einer Ebene auch im wesentlichen wendelförmige Polygonzüge möglich.

Eine weitere vorteilhafte Weiterbildung der Energieführungskette kann dadurch erzielt werden, daß zwei benachbarte Zentralkörper durch wenigsten ein Sperrorgan starr miteinander verbindbar sind. Diese Ausgestaltung hat den Vorteil, daß ein unbeabsichtigtes Lösen der starren Verbindung vermieden wird. Zur starren Verbindung wenigstens zweier Zentralkörper wird vorgeschlagen, daß jeder Zentralkörper wenigstens einen Halter zur Festlegung wenigstens eines Sperrorgans aufweist. Der Halter ist vorzugsweise im Zentralkörper ausgebildet. Zur Vereinfachung der Form und somit auch der Herstellbarkeit der Sperrorgane wird vorgeschlagen, daß wenigstens zwei Halter fluchtend angeordnet sind. Dies erleichtert auch die Verbindung des Sperrorgans mit zwei Haltern.

Der Halter weist vorzugsweise wenigstens eine Haltenut auf, in die wenigstens ein Abschnitt des Sperrorgans einbringbar ist. Der Bereich des Sperrorgans, der in die Haltenut eingreift, ist so ausgestaltet, daß zwischen dem Halter und dem Sperrorgan eine kraft- und/oder formschlüssige Verbindung entsteht. Dies hat den Vorteil, daß bei einer äußeren Einwirkung auf die Energieführungskette das Sperrorgan sicher und zuverlässig mit dem Halter verbunden ist und eine Verschiebung zwischen dem Sperrorgan und dem Kettenglied vermieden wird.

Die Gelenkverbindung zweier benachbarter Kettenglieder ist durch wenigstens eine in einem Endbereich eines Zentralkörpers ausgebildete Gelenkpfanne und wenigstens einen an einem Endbereich eines benachbarten Zentralkörpers ausgebildeten Gelenkkopfes gebildet, der teilweise von der Gelenkpfanne umgeben ist. Bei einer solchen Gelenkverbindung kann es sich um ein zweiachsiges Zapfengelenk, insbesondere ein Kreuzgelenk, oder ein Kugelgelenk handeln, wie dies aus dem Stand der Technik bekannt ist.

Zur Sperrung der Gelenkverbindung wird bei einer weiteren vorteilhaften Ausgestaltung der Energieführungskette vorgeschlagen, daß das Sperrorgan in einem kanalförmigen Halter, der in die Gelenkpfanne mündet, verschiebbar angeordnet ist, so daß das Sperrorgan zur Anlage an den Gelenkkopf bringbar ist. Das Sperrorgan begrenzt hierdurch die Bewegbarkeit der Gelenkkopfes in der Gelenkpfanne. Vorzugsweise ist der kanalförmige Halter im wesentlichen quer zur Längserstreckung des Zentralkörpers ausgebildet, so daß die Gelenkverbindung auch dann arretierbar ist, wenn bereits Leitungen in den Führungsabschnitten der Kettenglieder verlegt sind.

Um die Sperrwirkung möglichst einfach zu erreichen, wird vorgeschlagen, daß der kanalförmige Halter sich durch wenigstens einen Steg und die mit dem Steg verbundene Wandung hindurch erstreckt. Hierdurch wird eine gute Zugänglichkeit zum Sperrorgan erreicht, da die Mündung des kanalförmigen Halters nicht durch Leitungen, die im Führungsabschnitt verlegt sind, verstellt ist. Ein weiterer Vorteil kann auch darin gesehen werden, daß von außen leicht erkennbar ist, welche Gelenkverbindungen benachbarter Kettenglieder gesperrt sind oder nicht.

Um eine Sperrung einer Gelenkverbindung zwischen zwei benachbarten Kettengliedern aufzuheben, wird vorgeschlagen, daß der kanalförmige Halter sich durch zwei Stege und die mit den Stegen verbundene Wandung bzw. Wandungen hindurcherstreckt. Der kanalförmige Halter kann zum Führungsabschnitt hin offen sein.

Zur Verbesserung der Sperrwirkung des Sperrorgans wird vorgeschlagen, daß der Gelenkkopf wenigstens eine Anlagefläche aufweist, die das Sperrorgan zur Anlage bringt. Der Gelenkkopf kann in Form eines Polyeders, insbesondere eines regulären Polyeders, vorzugsweise eines Dodekaeders, ausgebildet sein. Durch diese Ausgestaltung kann die Gelenkverbindung durch das Sperrorgan gesperrt werden, wobei ein Auslenkwinkel zwischen zwei benachbarten Kettengliedern beibehalten bleibt. Alternativ hierzu kann das Sperrorgan keilförmig ausgebildet sein.

Gemäß einer anderen vorteilhaften Ausgestaltung der Energieführungskette wird vorgeschlagen, daß zwischen zwei benachbarten Zentralkörpern wenigstens ein Spalt ausgebildet ist. Zur Sperrung der Gelenkverbindung zweier benachbarter Kettenglieder ist das Sperrorgan wenigstens teilweise in den Spalt einbringbar, wodurch die Auslenkbarkeit der benachbarten Zentralkörper verringert wird. Vorzugsweise entspricht die Höhe des Sperrorgans der Höhe des Spaltes, so daß eine vollständige Sperrung der Gelenkverbindung möglich ist. Das Sperrorgan ist vorzugsweise mit wenigstens einem Zentralkörper lösbar verbindbar.

Zur Reduzierung der Bauteile der Energieführungskette wird vorgeschlagen, daß die Gelenkverbindung wenigstens zweier Kettenglieder dadurch erreicht wird, daß zwei benachbarte Kettenglieder so zueinander verschieblich sind, daß in einer ersten Stellung die Kettenglieder voneinander beabstandet sind und in einer zweiten Stellung die Kettenglieder wenigstens teilweise aneinander liegen.

Bei solch einer Energieführungskette wird vorgeschlagen, daß der Gelenkkopf der Gelenkverbindung in der ersten Stellung der Kettenglieder in der Gelenkpfanne und in der zweiten Stellung in einer der Gelenkpfanne nachgeordneten Gelenkkopfaufnahme angeordnet ist, wobei zwischen der Gelenkpfanne und der Gelenkkopfaufnahme ein Durchlaß ausgebildet ist, dessen lichte Querschnittsfläche kleiner ist als eine maximale Querschnittsfläche des Gelenkkopfes. Der Gelenkkopf ist hierbei unter Krafteinwirkung in die Gelenkkopfpfanne einbringbar. Hierdurch wird auch sichergestellt, daß der Gelenkkopf aus der Gelenkkopfaufnahme nicht unbeabsichtigt heraustritt und die Sperrwirkung aufgehoben wird.

Alternativ zu dieser Ausgestaltung wird ein Verbindungselement vorgeschlagen, das an einem Ende den Gelenkkopf aufweist, und das dem Gelenkkopf gegenüberliegende Ende mit einem Zentralkörper verbunden ist. Das Verbindungselement und der Zentralkörper sind relativ zueinander verschiebbar und so miteinander verriegelbar, daß die benachbarten Kettenglieder in der ersten Stellung voneinander beabstandet und in der zweiten Stellung wenigstens teilweise aneinander liegen.

Vorzugsweise ist das Verbindungselement wahlweise in Eingriff mit einem von wenigstens zwei Vorsprüngen bringbar. Die Vorsprünge sind im wesentlichen quer zur Längsrichtung des Zentralkörpers ausgebildet. Sie sind in Längsrichtung des Zentralkörpers voneinander beabstandet. Der Abstand der Vorsprünge zueinander ist so gewählt, daß die Kettenglieder auslenkbar sind, wenn das Verbindungselement mit einem Vorsprung in Eingriff ist, wobei die Kettenglieder wenigstens teilweise aneinander liegen, wenn das Verbindungselement mit dem anderen Vorsprung in Eingriff ist.

Bevorzugt ist eine Ausgestaltung der Energieführungskette, bei der die Vorsprünge in einer sich in Längsrichtung des Zentralkörpers erstreckenden Öffnung ausgebildet sind. Bei dieser Ausgestaltung der Energieführungskette greift das Verbindungselement in die Öffnung hinein. Die Vorsprünge sind vorzugsweise umlaufend ausgebildet, wodurch eine Verschwenkbarkeit der Kettenglieder um eine Längsachse des Zentralkörper ermöglicht wird.

Für den Eingriff des Verbindungselementes mit einem von wenigstens zwei Vorsprüngen wird vorgeschlagen, daß das Verbindungselement Rastnasen zur Anlage an die Vorsprünge aufweist.

Um die Kettenglieder aus einer ersten Stellung in eine zweite Stellung oder umgekehrt zu überführen, wird vorgeschlagen, daß wenigstens eine Rastnase des Verbindungselementes an wenigstens einem federnden Abschnitt des Verbindungselementes ausgebildet ist. Vorzugsweise weist das Verbindungselement zwei in Form von länglichen Laschen ausgebildete federelastische Abschnitte auf, wobei jeder Abschnitt eine Rastnase aufweist.

Die erfindungsgemäße Energieführungskette ist auch dazu geeignet, mehrere Bündel von Leitungen zu führen. Die einzelnen Bündel, die wenigstens zwei Leitungen umfassen, sind durch Stege voneinander getrennt. Zur Vermeidung von einer Vielzahl von Kettengliedern, die eine unterschiedliche Anzahl von Stegen aufweisen, wird vorgeschlagen, daß der wenigstens eine Steg an einem Ringelement angeordnet, insbesondere angeformt, ist und das Ringelement mit dem Zentralkörper verbindbar ist. Hierdurch reduzieren sich auch die Herstellungskosten, da lediglich eine Form eines Zentralkörpers für die Ausbildung der Energieführungskette notwendig ist. Diese Ausbildung hat auch den Vorteil, daß die Wandung, die mit dem Steg verbunden ist, unterschiedlicher Gestalt sein kann.

Vorzugsweise ist das Ringelement mit dem Zentralkörper lösbar verbindbar. Hierzu wird vorgeschlagen, daß eine Stirnfläche des Ringelementes wenigstens teilweise auf einem an einem Außenmantel des Zentralkörpers ausgebildeten Kragen aufliegt, wobei der Zentralkörper und/oder das Ringelement wenigstens eine federnde Raste aufweist, die mit dem Ringelement bzw. mit dem Zentralkörper in Eingriff bringbar ist.

Alternativ zu dieser Ausgestaltung wird vorgeschlagen, daß der Zentralkörper im wesentlichen kegelstumpfförmig ausgebildet ist. Das Ringelement weist eine entsprechende, eine der Außenkontur des kegelstumpfförmigen Zentralkörpers angepaßt Öffnung auf. Zur Festlegung des Ringelementes auf dem Zentralkörper ist ein am Zentralkörper ausgebildeter Kragen vorgesehen, an dem die Stirnseite des Ringelementes anliegt, die die kleinere Querschnittsfläche aufweist.

Vorzugsweise bestehen die Kettenglieder aus einem Kunststoff. Bevorzugt ist hierbei eine Ausbildung des Zentralkörpers, bei der der Zentralkörper durch wenigstens zwei Schalen gebildet ist. Zur Vereinfachung des Zusammenbaus des Zentralkörpers wird vorgeschlagen, daß die Schalen gelenkig miteinander verbunden sind. Die gelenkige Verbindung der Schalen kann vorzugsweise durch wenigstens ein Filmscharnier erfolgen. Diese Ausgestaltung der Schalen mit dem Filmscharnier kann einstückig sein.

Weitere Einzelheiten und Vorteile der Energieführungskette werden anhand der in der Zeichnung dargestellten Ausführungsbeispiele erläutert. Es zeigen:
- Fig. 1: perspektivisch ein erstes Ausführungsbeispiel einer Energieführungskette,
- Fig. 2: perspektivisch ein Gelenkteil der Energieführungskette nach Fig. 1,
- Fig. 3: perspektivisch ein Sperrorgan für eine Energieführungskette nach Fig. 1,
- Fig. 4: die Energieführungskette in einer Draufsicht.
- Fig. 5: perspektivisch ein zweites Ausführungsbeispiel einer Energieführungskette,
- Fig. 6: ein Sperrorgan für eine Energieführungskette nach Fig. 5,
- Fig. 7: perspektivisch ein drittes Ausführungsbeispiel einer Energieführungskette mit Sperrorgan,
- Fig. 8: perspektivisch ein viertes Ausführungsbeispiel einer Energieführungskette,
- Fig. 9: perspektivisch ein Sperrorgan für die Energieführungskette nach Fig. 8,
- Fig. 10: ein fünftes Ausführungsbeispiel einer Energieführungskette im Schnitt,
- Fig. 11: ein sechstes Ausführungsbeispiel einer Energieführungskette im Schnitt,
- Fig. 12: eine Schnittansicht einer Energieführungskette nach Fig. 11 mit gesperrten Gelenkverbindungen,
- Fig. 13: ein siebtes Ausführungsbeispiel einer Energieführungskette im Schnitt,
- Fig. 14: vergrößert im Schnitt einen Zentralkörper mit einem Ringelement,
- Fig. 15: eine Momentaufnahme eines Verbindungselementes mit einem Zentralkörper nach Fig. 13,
- Fig. 16: die Energieführungskette nach Fig. 13 im Schnitt mit gesperrten Gelenkverbindungen,
- Fig. 17: ein achtes Ausführungsbeispiel einer Vorrichtung im Schnitt,
- Fig. 18: die Energieführungskette nach Fig. 17 mit gesperrten Gelenkverbindungen,
- Fig. 19: ein erstes Ausführungsbeispiel eines Ringelementes mit Stegen und Wandung in einer Draufsicht, und
- Fig. 20: ein zweites Ausführungsbeispiel eines Ringelementes mit Stegen und Wandung in einer Draufsicht.

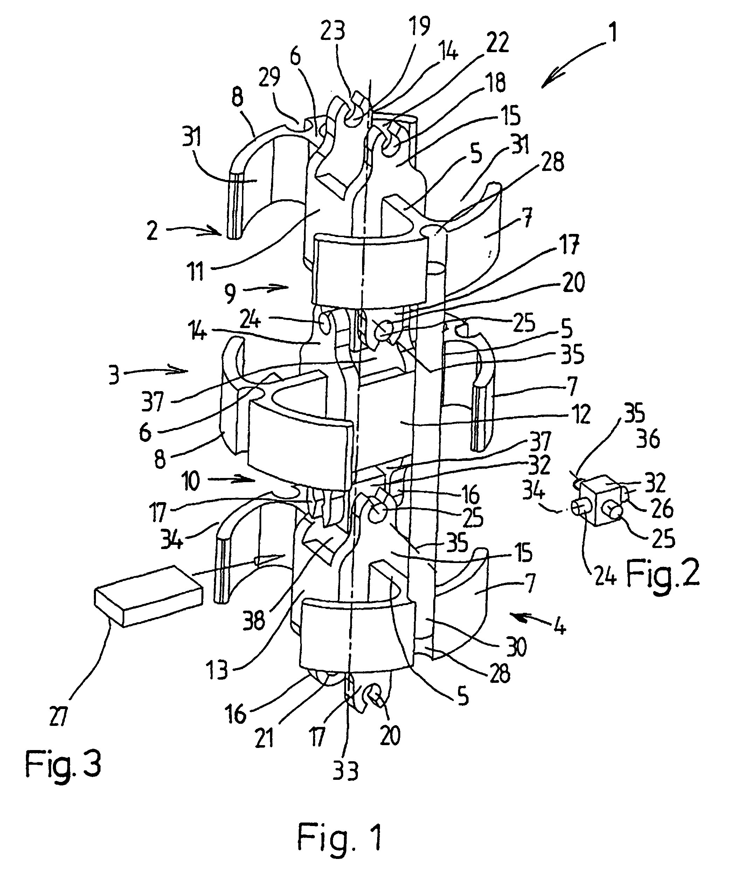

Fig. 1 zeigt ein erstes Ausführungsbeispiel einer Energieführungskette 1 zum Führen von Leitungen. In der Darstellung nach Fig. 1 sind drei Kettenglieder 2, 3 und 4 dargestellt, die gelenkig miteinander verbunden sind. Das Kettenglied 2 weist einen Zentralkörper 11 auf. Der Zentralkörper 11 erstreckt sich in Längsrichtung der Energieführungskette 1. Der Zentralkörper 11 ist im wesentlichen kastenförmig ausgebildet. Er weist einen im wesentlichen rechteckförmigen Querschnitt auf. Mit dem Zentralkörper 11 sind Stege 5, 6 verbunden. Die Stege 5, 6 sind an den gegenüberliegenden Seiten des Zentralkörpers 11 ausgebildet. Jeder Steg 5, 6 erstreckt sich im wesentlichen quer zur Längsrichtung des Zentralkörpers 11. Mit jedem Steg 5, 6 ist eine Wandung 7, 8 verbunden. Die Wandung 7, 8 ist konvex um den Zentralkörper 11 gekrümmt. Wie aus der Darstellung nach Fig. 1 ersichtlich ist, erstreckt sich die Wandung 7, 8 im wesentlichen symmetrisch beidseits des Steges 5 bzw. 6. Die Wandung 7, 8 begrenzt einen Führungsabschnitt 31.

Der Zentralkörper 11 weist an seinem einen Ende sich in Längsrichtung erstreckende Laschen 14, 15 auf. Die Laschen 14, 15 sind im Abstand zueinander ausgebildet und verlaufen im wesentlichen parallel zueinander. Die Lasche 15 weist eine Gelenkpfanne 18 auf. Die Lasche 14 weist eine Gelenkpfanne 19 auf. An dem den Laschen 14, 15 gegenüberliegenden Ende des Zentralkörpers 11 sind ebenfalls zwei sich in Längsrichtung des Zentralkörpers 11 erstreckende Laschen 16, 17 ausgebildet. Auch die Laschen 16, 17 weisen jeweils Gelenkpfannen 20, 21 auf. Die Lasche 15 und die Lasche 17 sowie die Laschen 14 und 21 liegen jeweils in einer gemeinsamen Ebene. Die Gelenkpfannen 18, 19, 20, 21 weisen bereichsweise einen kreisförmigen Querschnitt auf.

Die Kettenglieder 3, 4 sind gleich wie das Kettenglied 2 aufgebaut. In der Darstellung nach Fig. 1 ist das Kettenglied 3 gegenüber dem Kettenglied 2 bzw. dem Kettenglied 4 um die Längsachse 33 um 90° verdreht. Die Wandung 7 des Kettengliedes 2 überlappt teilweise die Wandung 7 und 8 des Kettengliedes 3. Die Wandung 8 des Kettengliedes 2 überlappt teilweise die Wandung 7 und 8 des Kettengliedes 3. Entsprechende Überlappungen der Wandung 7 und 8 sind auch zwischen dem Kettenglied 3 und 4 gegeben.

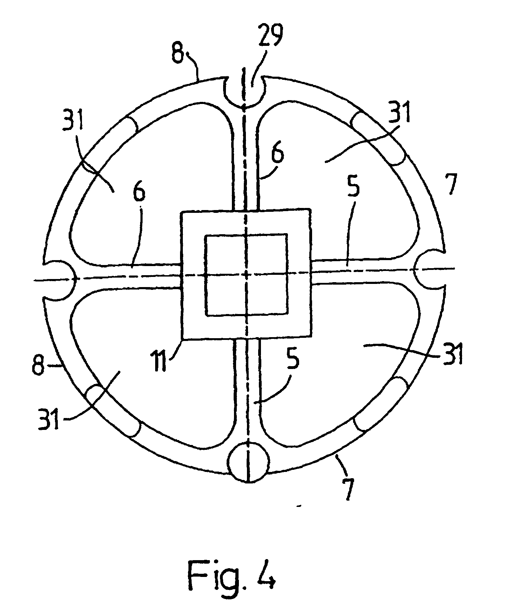

Die Fig. 4 zeigt eine Draufsicht der in der Fig. 1 dargestellten Energieführungskette 1. Aus der Draufsicht ist ersichtlich, daß die Energieführungskette 1 vier kreissektorförmige Führungsabschnitte 31 aufweist, die durch die überlappenden Wandungen 7, 8 sowie die Stege 5, 6 der fluchtend übereinander angeordneten Zentralkörper 11, 12, 13 begrenzt sind.

In der Fig. 1 is auch dargestellt, daß das Kettenglied 2 über eine Gelenkverbindung 9 mit dem Kettenglied 3 verbunden ist. Die benachbarten Kettenglieder 2, 3 sind räumlich relativ zueinander auslenkbar. Das Kettenglied 3 ist über eine Gelenkverbindung 10 mit dem Kettenglied 4 verbunden. Die benachbarten Kettenglied 3, 4 sind relativ zueinander auslenkbar. Bei der Gelenkverbindung 9 und 10 handelt es sich um ein Kreuzgelenk.

In der Fig. 2 ist ein Gelenkkörper 32 dargestellt, der Gelenkköpfe 24, 26, die auf einer gemeinsamen Achse 34 liegen, aufweist. Der Gelenkkörper 32 weist ferner zwei auf einer Achse 35 liegende Gelenkköpfe 25, 36 auf. Die Achsen 34, 35 schneiden sich unter einem rechten Winkel. Die Gelenkverbindung 9 ist dadurch gebildet, daß der Gelenkkörper 32 zwischen die Laschen 16, 17 des Zentralkörpers 11 eingebracht ist und die jeweiligen Gelenkköpfe 25, 36 durch die Einführschrägen 22 in die Gelenkpfanne 20 bzw. 21 eingebracht sind. Der Gelenkkörper 32 ist auch zwischen den Laschen 14, 15 des Kettengliedes 3 eingebracht. Der Gelenkkopf 24 ist in der in der Lasche 14 ausgebildeten Gelenkpfanne und der Gelenkkopf 26 in der in der Lasche 15 ausgebildeten Gelenkpfanne 18 angeordnet. Die benachbarten Kettenglieder 2, 3 sind um die Achsen 34, 35 verschwenkbar.

Die Gelenkverbindung 10 zwischen den benachbarten Kettengliedern 3, 4 ist gleichartig wie die Gelenkverbindung 9 ausgebildet.

Die Auslenkbarkeit der Kettenglieder 2, 3 und 4 ist jeweils sperrbar. Zur Sperrung der Auslenkbarkeit ist in dem in der Fig. 1 dargestellten Ausführungsbeispiel in der Außenseite der Wandung 7 eines jeden Kettengliedes 2, 3 und 4 ein eine sich in Längsrichtung der Energieführungskette 1 erstreckende Nut vorgesehen, die einen Halter 28 bildet. Auch die Wandung 8 eines jeden Kettengliedes 2, 3 und 4 weist an ihrer Außenseite jeweils einen gleichartig ausgebildeten Halter 29 auf. Die Auslenkbarkeit der Kettenglieder 2 und 4 sowie des Kettengliedes 3 ist durch ein Sperrorgan 30 gesperrt. Bei dem Sperrorgan 30 handelt es sich um ein stabförmig ausgebildetes Sperrorgan, das mit dem Halter 28 des Kettengliedes 2 und in dem Halter 28 des Kettengliedes 4 verbunden ist. Die Halter 28, 29 sind in Form einer Nut ausgebildet, deren Querschnitt dem Querschnitt des Sperrorgans 30 entspricht. Durch das Sperrorgan 30 ist die Auslenkbarkeit des Kettengliedes 3 vollständig gesperrt.

Um die Bewegungsmöglichkeit der drei Kettenglieder 2, 3 und 4 zu sperren ist auch ein in der Fig. 3 dargestelltes Sperrorgan 27 vorgesehen. Das Sperrorgan 27 weist einen im wesentlichen rechteckförmigen Querschnitt auf. Das Sperrorgan 27 ist in einen Halter 38 einbringbar, wodurch die Gelenkverbindung 10 vollständig gesperrt wird. Der Halter 38 ist durch einen Spalt gebildet, der durch die im wesentlichen parallel zueinander verlaufenden Laschen 14, 15, bzw. 16, 17 den Gelenkkörper 32 sowie den Zentralkörper 13 des Kettengliedes 4 begrenzt ist. Dadurch, daß die Gelenkverbindung 9 bzw. 10 eine zweiachsige Gelenkverbindung ist, ist zur Begrenzung der Auslenkbarkeit um die jeweilige Achse jeweils ein Halter 37, 38 vorgesehen, in den jeweils ein entsprechendes Sperrorgan 27 einbringbar ist. Der Halter 37, der im Zusammenwirken mit einem Sperrorgan 27 die Verschwenkbarkeit der benachbarten Kettenglieder 2, 3; 3, 4 um die Achse 34 begrenzt, ist zwischen dem Zentralkörper 12, den Laschen 14, 15 bzw. 16, 17 und dem Gelenkkörper 32 ausgebildet.

Die Auslenkbar zweier benachbarter Kettenglieder 2, 3; 3, 4 kann durch geeignete Auswahl von Sperrorganen und Haltern gesperrt werden. Zur Sperrung beispielsweise der Gelenkverbindung 10 können Sperrorgane 37 in den Halter 27 und in den Halter 38 eingeführt werden. In dem dargestellten Ausführungsbeispiel nach Fig. 1 verbindet das Sperrorgan 30 die Kettenglieder 2, 4 miteinander. Durch ein einziges Sperrorgan 30 können auch mehr als zwei Kettenglieder miteinander verbunden werden.

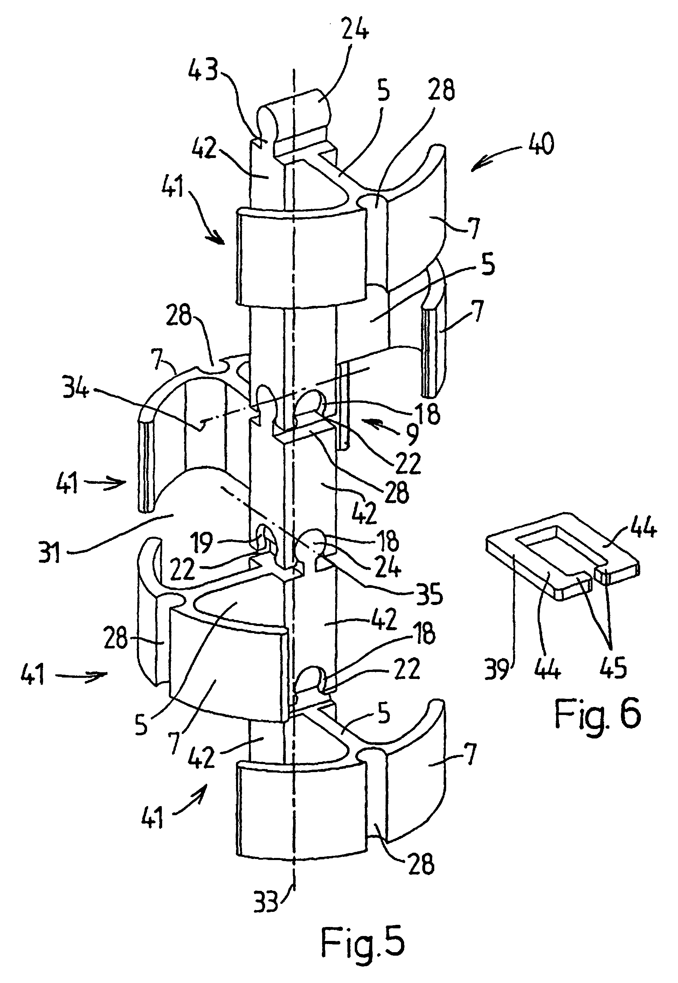

Fig. 5 stellt ein weiteres Ausführungsbeispiel einer Energieführungskette 40 zum stationären Führen von Leitungen dar. Die Energieführungskette 40 umfaßt eine Mehrzahl von gleichartigen Kettengliedern 41. Die Darstellung nach Fig. 5 zeigt fünf Kettenglieder 41, die gelenkig miteinander verbunden sind. Jedes Kettenglied 41 weist einen Zentralkörper 42 auf, der einen im wesentlichen rechteckförmigen Querschnitt hat. Andere Querschnitte des Zentralkörpers 42 sind möglich. An dem Zentralkörper 42 ist ein Steg 5 angeformt, der mit einer Wandung 7 verbunden ist. Die Wandung 7 begrenzt einen Führungsabschnitt 31. Die Wandung 7 ist mit Abstand zu dem Zentralkörper 42 ausgebildet. Sie ist bogenförmig. In der Außenseite der Wandung 7 ist ein Halter 28 ausgebildet, wie er bereits bei der Erläuterung des in der Fig. 1 dargestellten Ausführungsbeispiels beschrieben worden ist.

Der Zentralkörper 42 weist an seinem einen Ende einen länglichen Gelenkkopf 24 auf. Der Gelenkkopf 24 weist bereichsweise einen kreisförmigen Querschnitt auf. Der Gelenkkopf 24 ist über einen Hals 43 mit dem Zentralkörper 42 verbunden. Die Breite des Halses 43 ist Kleiner als der Durchmesser des Gelenkkopfes 24. An dem dem Gelenkkopf 24 gegenüberliegenden Ende des Zentralkörpers 42 sind zwei sich unter einem Winkel von 90° schneidende Gelenkpfannen 18, 19 ausgebildet. Die Innenkontur der Gelenkpfannen 18, 19 entspricht im wesentlichen der Außenkontur des Gelenkkopfes 24. Die gelenkig miteinander verbundenen Kettenglieder 41 sind jeweils um die Längsachse 33 um 90° versetzt angeordnet. Die Wandungen 7 benachbarter Kettenglieder 41 überlappen sich teilweise, so daß in einer Draufsicht die Energieführungskette 40 eine der Fig. 4 entsprechende Gestalt aufweist.

Die benachbarten Kettenglieder 41 sind jeweils um eine Achse 34 bzw. 35 auslenkbar, wobei die Achsen 34, 35 sich in einer Projektion unter einem Winkel von ca. 90° schneiden.

Zwischen zwei benachbarten Kettengliedern 41 ist ein Sperrorgan 39, wie es in der Fig. 6 dargestellt ist, einführbar. Das Sperrorgan 39 ist im wesentlichen U-förmig ausgebildet, wobei das Sperrorgan 39 an seinen freien Schenkeln 44 einander zugewandte Rastnasen 45 aufweist. Die freien Schenkel 44 sind federelastisch. Das Sperrorgan 39 ist in einen zwischen den benachbarten Zentralkörpern 42 ausgebildeten Halter 28 einführbar. Der Halter 28 ist durch die einander zugewandten Stirnflächen benachbarter Zentralkörper sowie den Hals 43 begrenzt. Beim Einführen des Sperrorgans 39 in den Halter 28 umgreifen die Rastnasen 45 den Hals 43. Das Sperrorgan 39 umgibt den Hals 43 nahezu vollständig. Die Außenkontur des Sperrorgans 39 entspricht im wesentlichen der Außenkontur des Zentralkörpers 42.

Dadurch, daß die benachbarten Kettenglieder 41 jeweils um eine Achse 34 bzw. 35 relativ zueinander auslenkbar sind, ist zur Sperrung der Auslenkbarkeit der benachbarten Kettenglieder 41 jeweils nur ein Sperrorgan 39 notwendig.

Statt oder zusätzlich zu dem Sperrorgan 39 kann zur Begrenzung der Auslenkbarkeit mehrerer Kettenglieder 41 ein stabförmiges Sperrorgan 30 verwendet werden, wie dies in der Fig. 1 dargestellt ist.

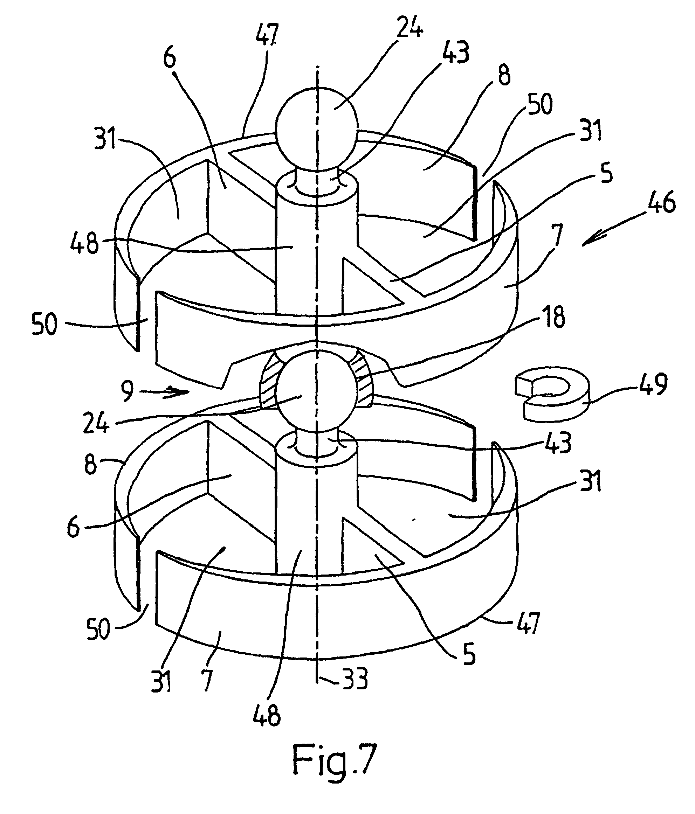

In der Fig. 7 ist ein drittes Ausführungsbeispiel einer Energieführungskette 46 zum stationären Führen von Leitungen dargestellt. Die Energieführungskette 46 umfaßt eine Mehrzahl von gelenkig miteinander verbundenen Kettengliedern 47. Jedes Kettenglied 47 weist einen im wesentlichen zylinderförmigen Zentralkörper 48 auf. Der Zentralkörper 48 ist über radial auswärts gerichtete Stege 5, 6 mit einer Wandung 7, 8 verbunden. Die Wandung 7 und die Wandung 8 sind kreisbogenförmig ausgebildet. Sie beschreiben jeweils einen Winkel von knapp 180°. Zwischen den freien Enden der Wandung 7 und der Wandung 8 ist jeweils ein Einführspalt 50 zum Einführen nicht dargestellter Leitungen vorgesehen. Zur Erleichterung der Einführung von Leitungen, die einen größeren Durchmesser haben als der Spalt 50 breit ist, verjüngen sich die Endbereiche der Wandung 7 bzw. 8 zum Einführspalt 50, wodurch die Wandung 7, 8 im Bereich des Einführspaltes 50 eine gewisse Elastizität aufweist. Die Kettenglieder 47 begrenzen jeweils zwei Führungsabschnitte 31.

Die Kettenglieder 47 sind identisch aufgebaut. Der Zentralkörper 48 weist an einem freien Ende einen Gelenkkopf 24 auf, der über einen Hals 43 mit dem Zentralkörper 48 verbunden ist. Das dem Gelenkkopf 24 gegenüberliegende Ende des Zentralkörpers 48 weist eine Gelenkpfanne 18 auf. Fig. 7 zeigt, daß die benachbarten Kettenglieder 47 mittels einer Kugelgelenkverbindung miteinander verbunden sind. Um die Auslenkbarkeit der benachbarten Kettenglieder 47 zu sperren ist ein im wesentlichen ringförmiges Sperrelemente 49 vorgesehen, welches auf dem Hals 43 anordenbar ist. Durch das Sperrorgan 49 wird die Auslenkbarkeit begrenzt, wobei eine Rotation der einzelnen Kettenglieder 47 um die Längsachse 33 möglich ist.

Die in der Fig. 7 dargestellten Kettenglieder 47 sind einstückig ausgebildet. Sie bestehen im wesentlichen aus Kunststoff.

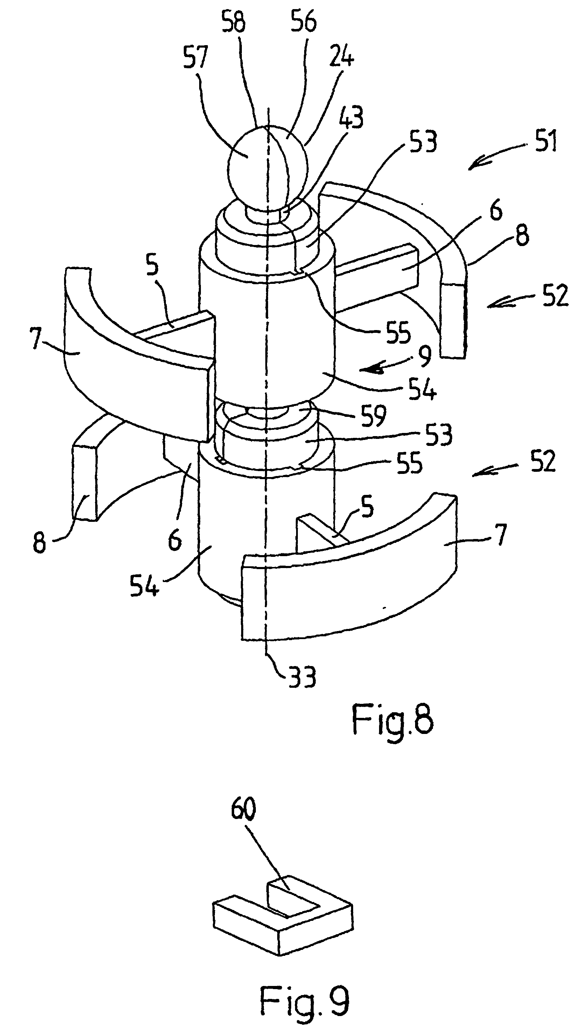

Eine Weiterentwicklung des in der Fig. 7 dargestellten dritten Ausführungsbeispiels zeigt das in der Fig. 8 dargestellte vierte Ausführungsbeispiel einer Energieführungskette zum stationären Führen von Leitungen. Der prinzipielle Aufbau des in der Fig. 8 dargestellten Ausführungsbeispiels der Energieführungskette 51 entspricht im wesentlichen dem in der Fig. 7 dargestellten Ausführungsbeispiel.

Die Energieführungskette 51 weist Kettenglieder 52 auf. Die Kettenglieder 52 weisen den gleichen Aufbau auf. Jedes Kettenglied 52 hat einen im wesentlichen zylinderförmigen Zentralkörper 53. Der Zentralkörper 53 weist an seinem einen Ende einen sich in Längsrichtung des Zentralkörpers 53 erstreckenden Hals 43, auf dem ein Gelenkkopf 24 angeordnet ist. An dem dem Gelenkkopf 24 gegenüberliegenden Ende des Zentralkörpers 53 ist eine nicht dargestellte Gelenkpfanne 18 vorgesehen, die mit einem Gelenkkopf des benachbarten Kettengliedes 52 eine Gelenkverbindung bildet.

Der Zentralkörper 53 ist durch zwei Schalen 56, 57 gebildet, die in einer gemeinsamen Längsebene 58 aneinander liegen. Durch die Schalen 56, 57 ist der Zentralkörper 53 als ein Hohlkörper ausgebildet. Auf dem Zentralkörper 53 ist ein Ringelement 54 angeordnet, das radial auswärts gerichtete Stege 5, 6 aufweist, die jeweils mit einer Wandung 7, 8 verbunden sind. Die Verbindung des Zentralkörpers 53 mit dem Ringelement 54 kann kraftund/oder formschlüssig sein. Zur Positionierung des Ringelementes 54 auf dem Zentralkörper 53 weist das Ringelement 54 eine sich über wenigstens einen Teil der Längserstreckung des Ringelementes 54 verlaufende Nut 55 auf, in die ein an der Außenfläche des Zentralkörpers 53 ausgebildeter Vorsprung hineinragt. Das Ringelement 54 kann mehrere im Abstand zueinander ausgebildete Nuten 55 aufweisen, wie dies aus der Fig. 8 ersichtlich ist.

Die Auslenkbarkeit der benachbarten Kettenglieder 52 kann dadurch begrenzt werden, daß in den zwischen den benachbarten Zentralkörpern 53 ausgebildeten Spalt 59, der einen Halter für ein in der Fig. 9 dargestelltes Sperrorgan 60 bildet. Die Höhe des Sperrorgans 60 entspricht der Höhe des Spaltes 59. Das in der Fig. 9 dargestellte Sperrorgan 60 ist im wesentlichen U-förmig ausgebildet. Alternativ kann auch ein Sperrorgan verwendet werden, wie es in der Fig. 7 dargestellt ist. Bei einem solchen Sperrorgan wird eine Rotationsmöglichkeit der Kettenglieder 52 um die Längsachse 33 ermöglicht.

Die Ausgestaltung der Wandungen 7, 8 und der Stege an dem Ringelement 54 stellt ein Ausführungsbeispiel dar. Diese können auch andere Formen oder Gestalt aufweisen. Beispielsweise kann die Wandung 7, 8 entsprechend der in der Fig. 7 dargestellten Ausführungsform der Wandung 7, 8 ausgebildet sein. Es ist nicht notwendig, daß jedes Kettenglied 52 die gleiche Ausgestaltung der Wandung 7, 8 aufweist.

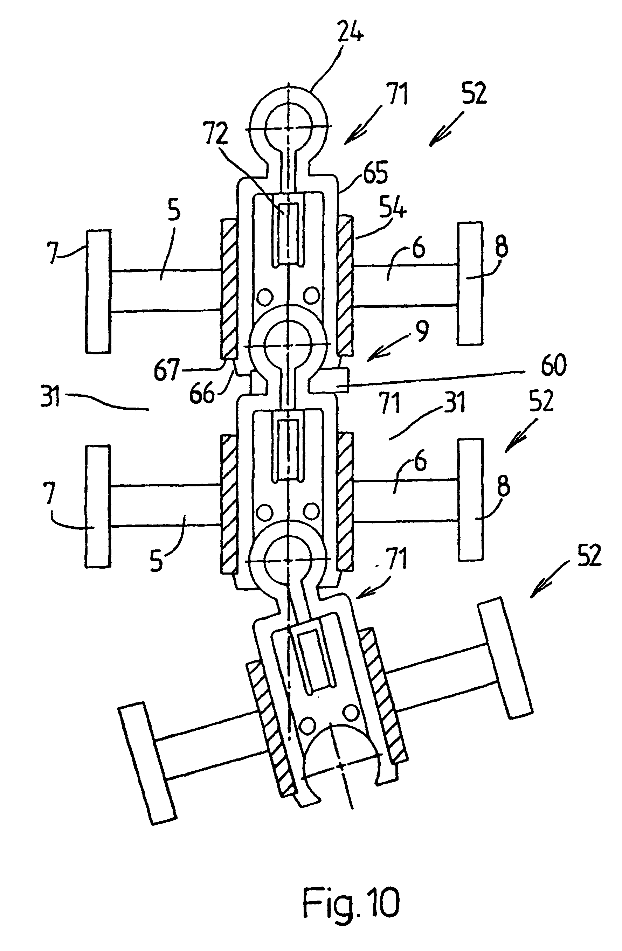

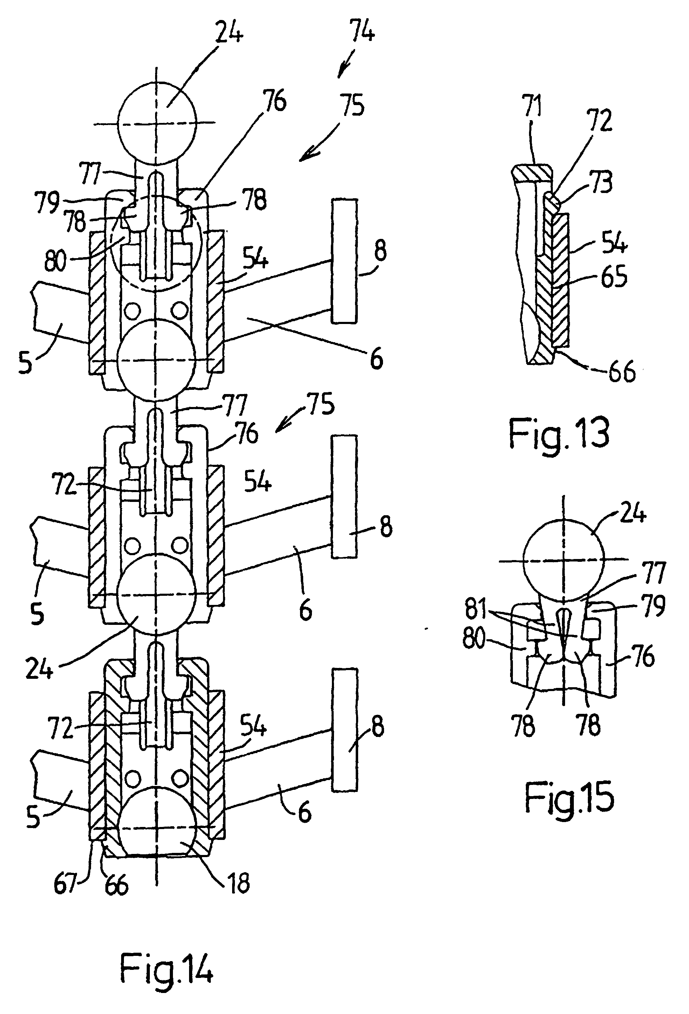

In der Fig. 10 ist ein weiteres Ausführungsbeispiel einer Energieführungskette und zum Führen von Leitungen dargestellt. Der prinzipielle Aufbau dieser Energieführungskette entspricht dem Aufbau der Energieführungskette 51 wie sie in der Fig. 8 dargestellt ist. Auch diese Energieführungskette weist Kettenglieder 52, die gelenkig miteinander verbunden sind. Jedes Kettenglied 52 weist einen Zentralkörper 71 auf, der durch zwei miteinander verbundene Schalen gebildet ist. Auf dem Zentralkörper 71 ist ein Ringelement 54 angeordnet. Der Zentralkörper 71 ist im wesentlichen zylinderförmig ausgebildet. Er weist in seinem dem Gelenkkopf 24 gegenüberliegenden Endbereich einen umlaufenden Kragen 66 auf, an dem eine Stirnfläche 67 des Ringelementes 54 anliegt. Zur Festlegung des Ringelementes 54 auf dem zylinderförmigen Abschnitt 65 des Zentralkörpers 71 weist der Zentralkörper 71 eine federnde Raste 72 auf, die in Eingriff mit dem Ringelement 54 bringbar ist. Die federnde Raste 72 ist insbesondere in der Fig. 13 dargestellt. Das Ringelement 54 ist auf dem Abschnitt 65 des Zentralkörpers 71 zwischen dem Kragen 66 und einem Vorsprung 73 der Raste 72 festgelegt. Dadurch, daß der Zentralkörper 71 als ein Hohlkörper ausgebildet ist, kann die Raste 72 in den Innenraum des Zentralkörpers 71 gebogen werden, so daß das Ringelement 54 freigegeben wird und das Ringelement 54 von dem Zentralkörper 71 abgezogen werden kann. Die federnde Raste 72 ist einstückig mit einer Schale 56 bzw. 57 des Zentralkörpers 71 hergestellt. Zur Festlegung des Ringelementes 54 können auf dem Umfang mehrere, vorzugsweise äquidistant zueinander angeordnete Rasten 72 vorgesehen sein.

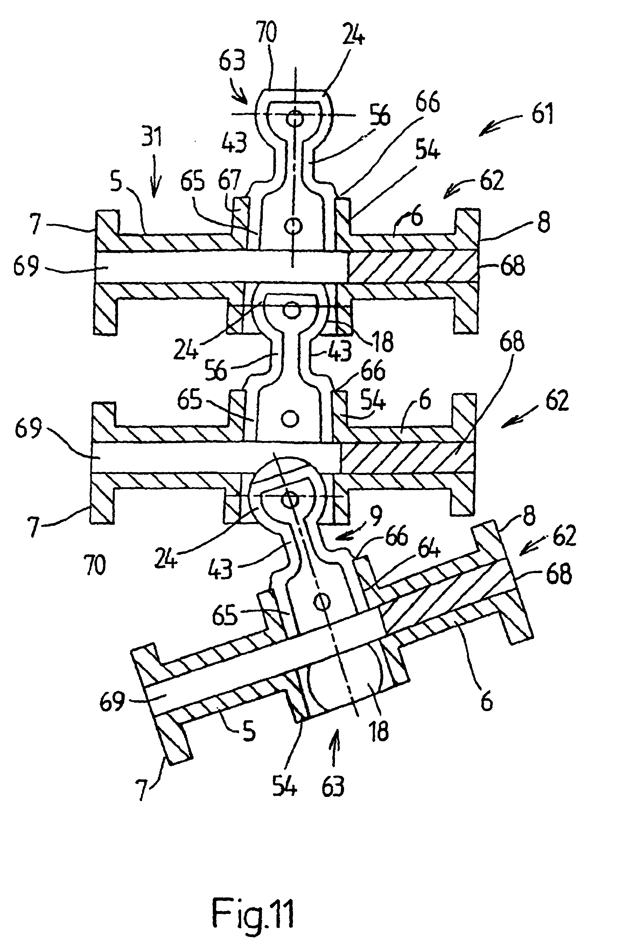

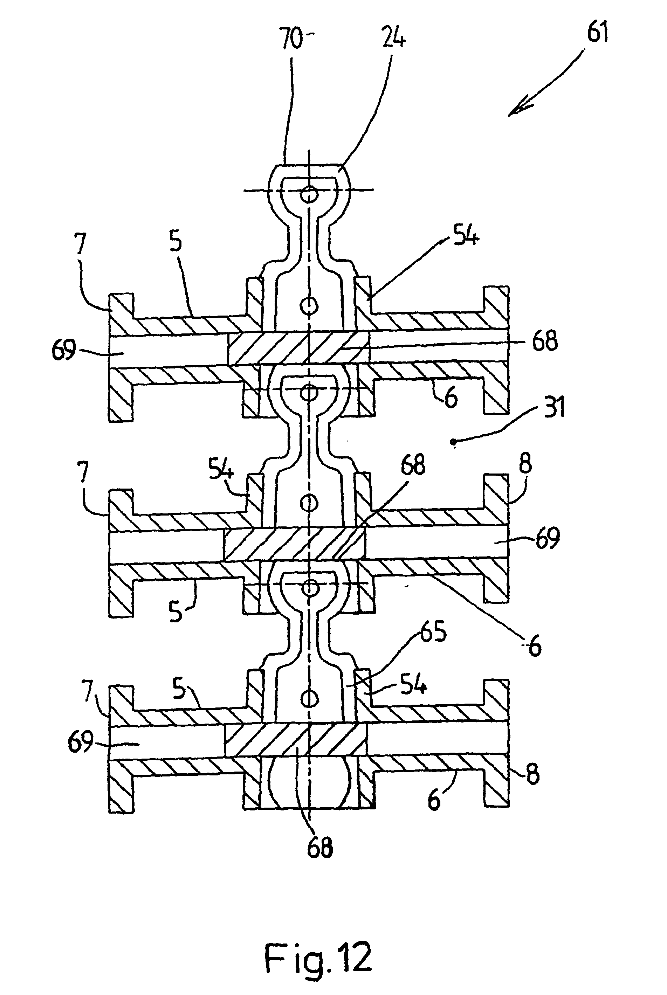

In den Fig. 11, 12 ist ein weiteres bevorzugtes Ausführungsbeispiel einer Energieführungskette 61 zum stationären Führen von Leitungen dargestellt. Die Darstellung zeigt die Energieführungskette 61 im Vollschnitt. Die Energieführungskette 61 umfaßt mehrere Kettenglieder 62. Jedes Kettenglied 62 weist einen Zentralkörper 63 auf, der durch zwei Schalen 56 gebildet ist. An einem Ende des Zentralkörpers 63 ist ein Hals 43 ausgebildet, auf dem ein Gelenkkopf 24 angeformt ist. Das dem Gelenkkopf 24 gegenüberliegende Ende weist eine innerhalb des Zentralkörpers 63 ausgebildete Gelenkpfanne 18 auf, in die ein Gelenkkopf 24 eines benachbarten Zentralkörpers 63 einbringbar ist, wodurch eine gelenkige Verbindung zwischen zwei benachbarten Zentralkörpern 63 bzw. benachbarten Kettengliedern 62 geschaffen wird.

Auf dem Zentralkörper 63 ist ein Ringelement 54 angeordnet, der zwei im wesentlichen radial auswärts gerichtete Stege 5, 6 aufweist. Die Stege 5, 6 liegen in einer gemeinsamen Ebene. An den freien Enden eines jeden Stegs 5, 6 ist eine Wandung 7, 8 ausgebildet. Wie aus der Fig. 11 ersichtlich ist weist der Zentralkörper 63 einen im wesentlich kegelstumpfförmig ausgebildeten Abschnitt 65 auf. Der kegelstumpfförmige Abschnitt 65 verjüngt sich zu dem Gelenkkopf 24 hin. Das Ringelement 54 weist eine dem kegelstumpfförmigen Abschnitt 65 des Zentralkörpers 63 entsprechende Innenkontur auf, so daß der Innenmantel des Ringelementes 54 an dem Außenmantel 64 des kegelstumpfförmigen Abschnitts 65 anliegt. Zur axialen Begrenzung des Ringelementes 54 auf dem Zentralkörper 63 ist im Bereich des kleinsten Querschnittes des kegelförmigen Abschnitts 65 am Außenmantel 64 ein umlaufender Kragen 66 ausgebildet, an dem eine Stirnfläche 67 des Ringelementes 54 anliegt. Zur Anbringung des Ringelementes 54 auf dem Zentralkörper 63 wird das Ringelement über den Gelenkkopf 54 in Längsrichtung des Zentralkörpers 63 aufgeschoben, bis der Innenmantel des Ringelementes 54 an dem Außenmantel 64 des kegelförmigen Abschnitts 65 anliegt und die Stirnfläche 67 hinter den umlaufenden Kragen 66 schnappt, wodurch zwischen dem Ringelement 54 und dem Zentralkörper 63 eine vorzugsweise Kegelpressverbindung entsteht.

In der in der Fig. 11 dargestellten Energieführungskette 61 sind die Kettenglieder 62 relativ zueinander schwenkbar. Zur Sperrung der Auslenkbarkeit zweier benachbarter Kettenglieder 62 ist ein Sperrorgan 68 vorgesehen, welches verschieblich in einem kanalförmigen Halter 69 angeordnet ist. Er durchdringt teilweise die Gelenkpfanne 18. In dem dargestellten Ausführungsbeispiel nach Fig. 11 erstreckt sich der kanalförmige Halter durch die Stege 5, 6 und die Wandungen 7, 8, so daß das Sperrorgan 68 sowohl von der Wandung 7 als auch von der Wandung 8 hier in oder aus dem kanalförmigen Halter 69 verschoben werden kann.

Zur Arretierung der Gelenkverbindung zwischen zwei benachbarten Kettengliedern 62 wird das Sperrorgan 68 in den Bereich der Gelenkverbindung wenigstens teilweise eingeführt. Fig. 12 zeigt die Lage des Sperrorgans 68 innerhalb des kanalförmigen Halters 69, in der die Auslenkbarkeit benachbarter Kettenglieder 62 gesperrt ist. Das Sperrorgan 68 erstreckt sich in die Gelenkverbindung, wobei eine Fläche des Sperrorgans 68 an eine Anlagefläche 70 des Gelenkkopfes 24 anliegt. Dadurch, daß der kanalförmige Halter 69 an seinen beiden Enden offen ist, ist eine einfache Zugänglichkeit zu dem Sperrorgan 68 gewährleistet. Dadurch ist es möglich, das Sperrorgan 68 aus dem Eingriffsbereich wieder herauszuschieben, wodurch die Gelenkverbindung zwischen benachbarten Kettengliedern 62 aufgehoben werden kann. Statt eines beidseits offenen kanalförmigen Halters 69 ist es auch möglich, einen einseitig offenen kanalförmigen Halter 69 vorzusehen, wobei dann das Sperrorgan 68 vorzugsweise einen Werkzeugeingriffsbereich hat, der in Eingriff mit einem Werkzeug bringbar ist, welches in den kanalförmigen Halter 69 einführbar ist, so daß das Sperrorgan 68 aus dem Eingriffbereich der Gelenkverbindung herausziehbar ist. Durch entsprechende Ausgestaltung der Anlagefläche 70 und des Sperrorgans 68 kann eine Sperrung der Gelenkverbindung zwischen benachbarten Kettengliedern 62 erreicht werden, wobei zwei benachbarte Kettenglieder 62 in einem ausgelenkten Zustand gesperrt werden.

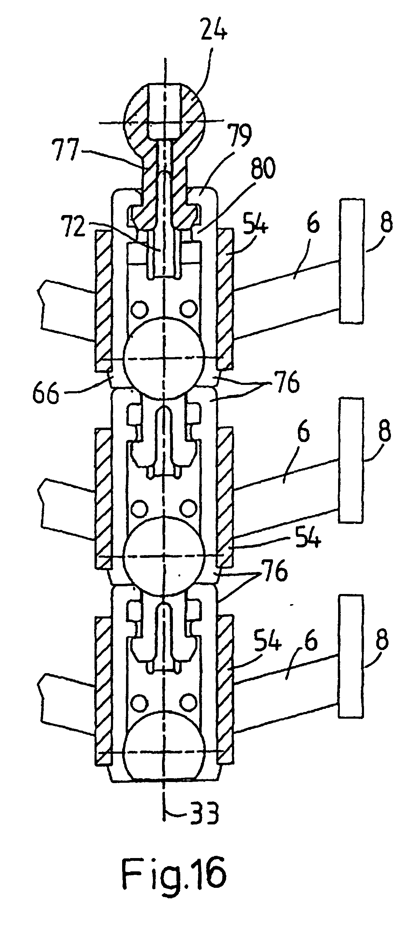

Fig. 14 zeigt ein weiteres Ausführungsbeispiel einer Energieführungskette 74 zum Führen von Leitungen. Bei dieser Energieführungskette 74 sind wenigstens zwei benachbarte Kettenglieder 75 so zueinander axial verschieblich, daß in einer ersten Stellung die Kettenglieder 75 voneinander beabstandet, wie dies in der Fig. 14 dargestellt ist, und in einer zweiten Stellung die Kettenglieder 75 aneinanderliegen, wie dies in der Fig. 16 dargestellt ist.

Benachbarte Kettenglieder 75 sind durch ein Kugelgelenk miteinander verbunden. Jedes Kettenglied weist einen Zentralkörper 76 auf, der an einem Ende eine Gelenkpfanne 18 und an einem anderen Ende einen Gelenkkopf 24 auf. Der Gelenkkopf 24 eines Kettengliedes 75 ist in die Gelenkpfanne 18 eines benachbarten Kettengliedes 75 einbringbar. Der Gelenkkopf 24 ist über ein Verbindungselement 77 mit dem Zentralkörper 76 verbunden. Das Verbindungselement 77 und der Zentralkörper 76 sind relativ zueinander entlang der Längsachse des Zentralkörpers 76 verschiebbar miteinander verriegelbar, daß die benachbarten Kettenglieder 75 in der ersten Stellung voneinander beabstandet sind, und in der zweiten Stellung die Kettenglieder 75 aneinander liegen. Das Verbindungselement 77 weist Rastnasen 78 auf, die mit einem Vorsprung 79 und einem Vorsprung 80 in Eingriff bringbar sind. Der Vorsprung 79 und der Vorsprung 80 sind radial einwärts in den als Hohlkörper ausgebildeten Zentralkörper 76 gerichtet. Die Rastnasen 78 sind radial auswärts gerichtet. Die Darstellung der Energieführungskette 74 in der Fig. 14 zeigt, daß die Rastnasen 78 mit dem Vorsprung 79 in Eingriff ist. In dieser Stellung des Verbindungselementes 77 sind die benachbarten Kettenglieder 75 relativ zueinander auslenkbar. Zur Begrenzung der Auslenkbarkeit benachbarter Kettenglieder 75 wird das Verbindungselement 77 in Längsrichtung des Zentralkörpers 76 gedrückt. Eine Momentaufnahme während dieses Vorgangs zeigt die Fig. 15. Beim Hineinschieben des Verbindungselementes 77 in den Zentralkörper 76 werden die federelastischen Abschnitte 81 des Verbindungselementes 77 zusammengedrückt, bis die Rastnasen 78 auf die Höhe des Vorsprungs 80 gelangen. Befinden sich die Rastnasen 78 unter dem Vorsprung 80, so hat das Verbindungselement 77 mit dem Gelenkkopf 24 seine Endstellung erreicht, in der die benachbarten Zentralkörper 76 aneinander liegen, wie dies in der Fig. 16 dargestellt ist.

Die Sperrung der Auslenkbarkeit der benachbarten Kettenglieder 75, wie sie anhand des in der Fig. 14 dargestellten Ausführungsbeispiels erfolgt, kann auch bei Gelenkverbindungen erreicht werden, bei denen es sich nicht um Kugelgelenkverbindungen handelt.

Auf dem Zentralkörper 76 ist ein Ringelement 54 angeordnet. Das Ringelement 54 ist über Stege 5, 6 mit einer Wandung 8 verbunden. Die jeweilige Wandung 8 eines jeden Kettengliedes 75 begrenzt einen Führungsabschnitt 31. Die Festlegung des Ringelementes 54 auf dem Zentralkörper 76 erfolgt entsprechend der in der Fig. 13 dargestellten Weise. Der Zentralkörper 76 weist wenigstens eine in einem Schlitz federnde Raste 72 auf, die eine nach außen gerichtete Nase 73 aufweist. Zwischen der Nase 73 und einem umlaufenden Kragen 66 ist das Ringelement 54 gehaltert.

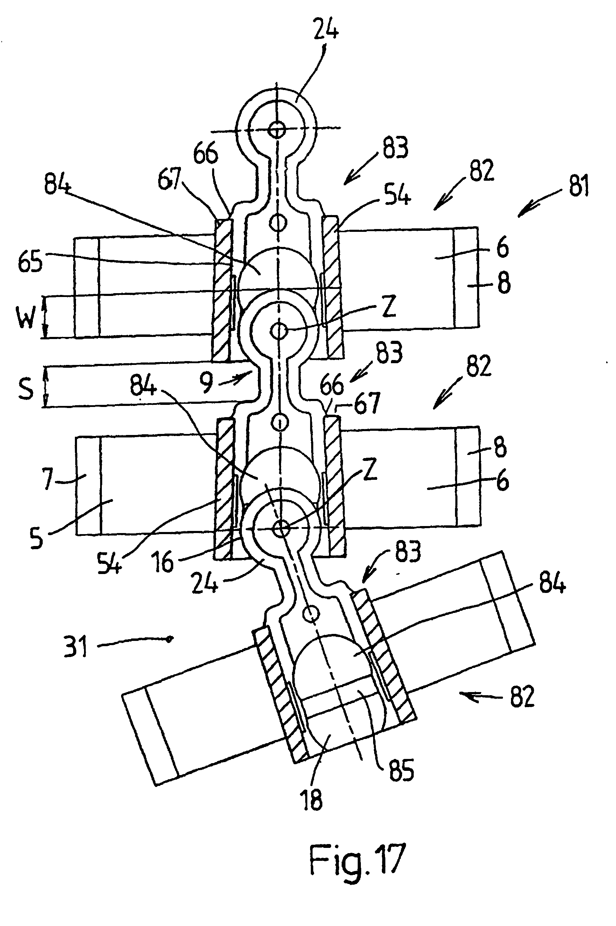

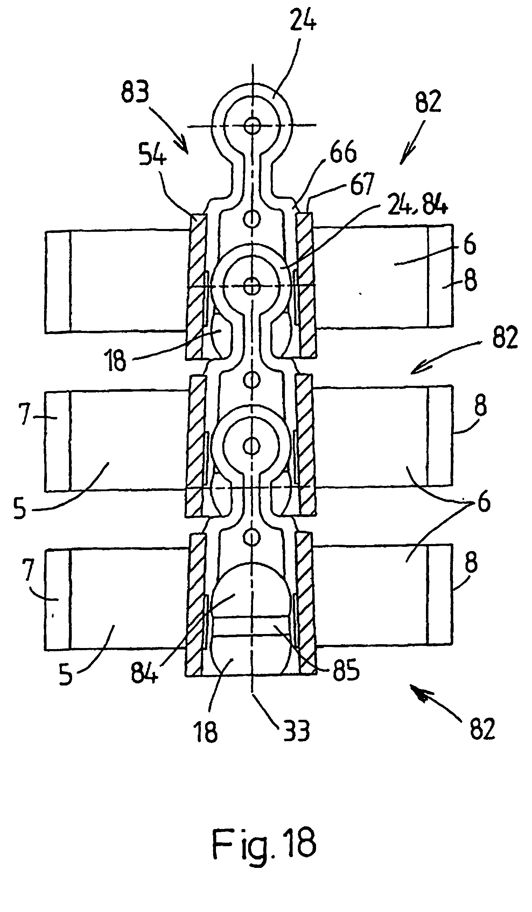

In der Fig. 17 ist ein weiteres Ausführungsbeispiel einer Energieführungskette 82 zum Führen von Leitungen dargestellt. Die Energieführungskette 82 umfaßt mehrere gelenkig miteinander verbundene Kettenglieder 83. Die benachbarten Kettenglieder 83 sind so zueinander verschieblich, daß in einer ersten Stellung die Kettenglieder 82 voneinander beabstandet sind und in einer zweiten Stellung die Kettenglieder 82 aneinander liegen. In der Fig. 17 ist die erste Stellung der Kettenglieder 82 dargestellt. Fig. 18 zeigt die Kettenglieder 82 in der zweiten Stellung, in der diese aneinander liegen.

Jedes Kettenglied 82 weist einen Zentralkörper 83 auf, der an einem Ende einen Gelenkkopf 24 und an seinem gegenüberliegenden Ende eine Gelenkpfanne 18 aufweist. In der ersten Stellung der Kettenglieder 82 sind die Gelenkköpfe 24 in den Gelenkpfannen 18 der benachbarten Kettenglieder 82 angeordnet, wie dies in der Fig. 17 dargestellt ist. Innerhalb eines jeden Zentralkörpers 83 ist eine weitere Gelenkkopfaufnahme 84 ausgebildet, die der Gelenkpfanne 18 axial vorgeordnet ist. Zwischen der Gelenkpfanne 18 und der Gelenkkopfaufnahme 84 ist ein Durchlaß 85 ausgebildet, dessen lichte Querschnittsfläche kleiner ist als die maximale Querschnittsfläche des Gelenkkopfes 24. Werden zwei benachbarte, gelenkig miteinander verbundene Kettenglieder 82 zusammengedrückt, so gelangt der Gelenkkopf 24 durch den Durchlaß 85 in die Gelenkkopfaufnahme 84. Der Verschiebeweg W des Gelenkkopfes 24, insbesondere des Zentrums Z des Gelenkkopfes entspricht der Spaltbreite S zwischen zwei benachbarten Zentralkörpern 83, so daß die benachbarten Zentralkörper 83 aneinander zur Anlage kommen, wie in der Fig. 18 dargestellt ist. Die Gelenkkopfaufnahme 84 entspricht in ihrer Innenkontur im wesentlichen der Innenkontur der Gelenkpfanne 18. Die Kettenglieder 82 sind aber um die Längsache 33 nach verschwenkbar. Soll solch eine Verschwenkbarkeit auch begrenzt werden, so kann es zweckmäßig sein, an den oder in den aneinanderliegenden Flächen benachbarter Zentralkörper 83 Rastmittel, beispielsweise in Form von Vorsprüngen und Ausnehmungen auszubilden die in Umfangrichtung ineinandergreifen, wenn die Zentralkörper 83 aneinanderliegen.

Bei den in den Fig. 17 und 18 dargestellten Ausführungsformen der Energieführungskette 81 sind zur Sperrung der Auslenkbarkeit benachbarter Kettenglieder 82 keine zusätzlichen Bauelemente oder Bauteile notwendig.

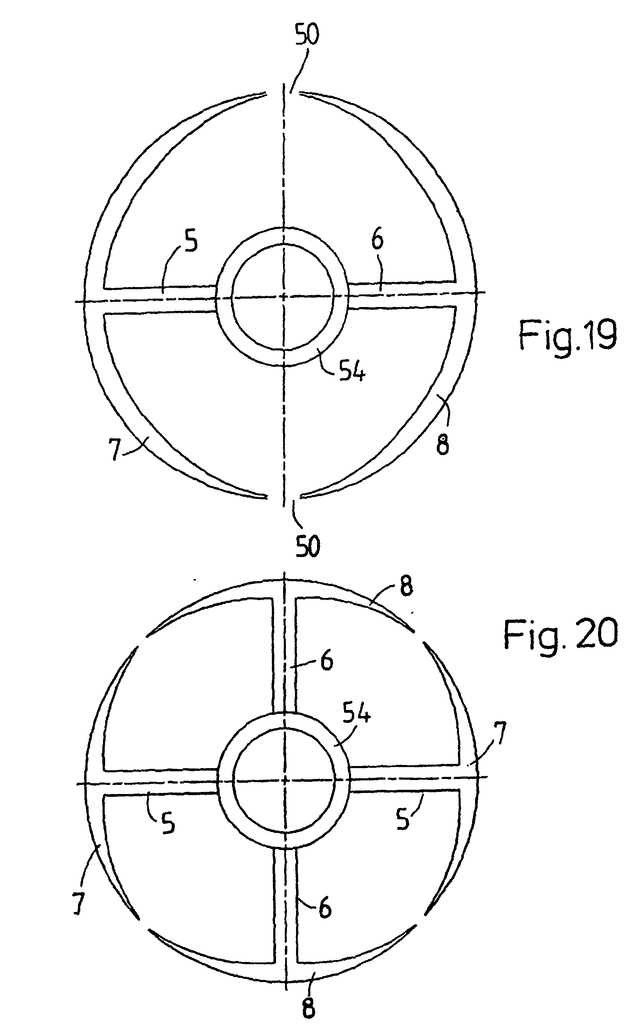

Die Kettenglieder können einstückig ausgebildet sein. In dem in der Fig. 17 dargestellten Ausführungsbeispiel ist das Kettenglied 82 zweiteilig. Es weist einen Zentralkörper 83 auf, auf dem ein Ringelement 54 mit angeformten Stegen 5, 6 und Wandungen 7, 8 angeordnet ist. Der Zentralkörper 83 weist einen sich zum Gelenkkopf 24 verjüngenden konischen Abschnitt 65 auf. Im Bereich der kleinsten Querschnittsfläche des Abschnitts 65 ist ein umlaufender Kragen 66 ausgebildet, der als Anschlag für eine Stirnfläche 67 des Ringelementes 54 dient. Mit dem Zentralkörper 83 kann ein Ringelement 54 verbunden werden, an dem eine unterschiedliche Anzahl von Stegen 5, 6 mit unterschiedlich angeformten und ausgestalteten Wandungen 7, 8 ausgebildet sein können. In den Fig. 19 und 20 sind beispielhaft mögliche Ausgestaltungen dargestellt.

### Bezugszeichenliste

- 1: Energieführungskette
- 2, 3, 4: Kettenglied
- 5, 6: Steg
- 7, 8: Wandung
- 9, 10: Gelenkverbindung
- 11, 12, 13: Zentralkörper
- 14, 15, 16, 17: Lasche
- 18, 19, 20, 21: Gelenkpfanne
- 22, 23: Einführschräge
- 24, 25, 26: Gelenkkopf
- 27: Sperrorgan
- 28, 29: Halter
- 30: Sperrorgan
- 31: Führungsabschnitt
- 32: Gelenkkörper
- 33: Längsachse
- 34, 35: Achse
- 36: Gelenkkopf
- 37, 38: Halter
- 39: Sperrorgan
- 40: Energieführungskette
- 41: Kettenglied
- 42: Zentralkörper
- 43: Hals
- 44: Schenkel
- 45: Rastnasen
- 46: Energieführungskette
- 47: Kettenglied
- 48: Zentralkörper
- 49: Sperrorgan
- 50: Einführspalt
- 51: Energieführungskette
- 52: Kettenglied
- 53: Zentralkörper
- 54: Ringelement
- 55: Nut
- 56, 57: Schale
- 58: Längsebene
- 59: Spalt
- 60: Sperrorgan
- 61: Energieführungskette
- 62: Kettenglied
- 63: Zentralkörper
- 64: Außenmantel
- 65: Abschnitt
- 66: Kragen
- 67: Stirnfläche
- 68: Sperrorgan
- 69: Halter
- 70: Anlagefläche
- 71: Zentralkörper
- 72: Raste
- 73: Vorsprung
- 74: Energieführungskette
- 75: Kettenglied
- 76: Zentralkörper
- 77: Verbindungselement
- 78: Nase
- 79, 80: Vorsprung
- 81: Energieführungskette
- 82: Kettenglied
- 83: Zentralkörper
- 84: Gelenkkopfaufnahme
- 85: Durchlaß

## Patentansprüche

1. Energieführungskette zum stationären Führen von Leitungen, mit beweglichen Kettengliedern (2, 3, 4, 41, 47, 52, 62, 75, 82), die jeweils wenigstens einen sich in Längsrichtung der Energieführungskette (1, 40, 46, 61, 74, 80) erstreckenden Führungsabschnitt (31) aufweisen, der durch wenigstens eine Wandung (7, 8) begrenzt ist, die über wenigstens einen Steg (5, 6) mit einem Zentralkörper (11, 12, 13, 42, 48, 53, 63, 71, 76, 83) verbunden ist, wobei die benachbarten Kettenglieder (2, 3, 4, 41, 47, 52, 62, 75, 82) durch Gelenkverbindungen (9, 10) relativ zueinander räumlich auslenkbar sind, **dadurch gekennzeichnet, daß** jedoch wenigstens zwei Kettenglieder (2, 3, 4, 41, 47, 52, 62, 75, 82) durch wenigstens ein Sperrorgan (27, 30, 39, 49, 60, 68) fluchtend starr miteinander verbindbar sind.

2. Energieführungskette nach Anspruch 1, **dadurch gekennzeichnet, daß** wenigstens ein starres Sperrorgan (30) mit der jeweiligen Wandung (7, 8) wenigstens zweier Kettenglieder (2, 3, 4, 41) verbindbar ist.

3. Energieführungskette nach Anspruch 2, **dadurch gekennzeichnet, daß** die Wandung (7, 8) wenigstens einen Halter (28, 29) zur Aufnahme des Sperrorgans (30) aufweist.

4. Energieführungskette nach Anspruch 3, **dadurch gekennzeichnet, daß** der Halter (28, 29) an einer Außenseite der Wandung (7, 8) ausgebildet ist.

5. Energieführungskette nach einem der Ansprüche 1 bis 4, **dadurch gekennzeichnet, daß** das Sperrorgan (30) stabförmig ausgebildet ist.

6. Energieführungskette nach Anspruch 1, **dadurch gekennzeichnet, daß** zwei benachbarte Zentralkörper (11, 12, 13, 42, 48, 53, 63) durch ein Sperrorgan (27, 39, 49, 60, 68) starr miteinander verbindbar sind.

7. Energieführungskette nach Anspruch 6, **dadurch gekennzeichnet, daß** jeder Zentralkörper (11, 12, 13, 42, 48, 53, 63) wenigstens einen Halter (37, 38, 69) zur Festlegung wenigstens eines Sperrorgans (27, 39, 49, 60, 68) aufweist.

8. Energieführungskette nach Anspruch 7, **dadurch gekennzeichnet, daß** der Halter (38, 39, 69) am Zentralkörper (11, 12, 13, 42, 48, 53, 63) ausgebildet ist.

9. Energieführungskette nach Anspruch 1, **dadurch gekennzeichnet, daß** wenigstens zwei Halter (28, 29) fluchtend ausgebildet sind.

10. Energieführungskette nach Anspruch 9, **dadurch gekennzeichnet, daß** der Halter (28, 29) wenigstens eine Haltenut aufweist.

11. Energieführungskette nach Anspruch 6, 7 oder 8, wobei die Gelenkverbindung (9, 10) durch eine in einem Endbereich eines Zentralkörpers (11, 12, 13, 42, 48, 53, 63, 71, 76, 83) ausgebildete Gelenkpfanne (18, 19, 20, 21) und einen an einem Endbereich eines benachbarten Zentralkörpers (11, 12, 13, 42, 48, 53, 63, 76, 83) ausgebildeten Gelenkkopfes (24, 25, 26, 36), der teilweise von der Gelenkpfanne (18, 19, 20, 21) umgeben ist, ausgebildet ist, **dadurch gekennzeichnet, daß** das Sperrorgan (68) in einen kanalförmigen Halter (69), der in die Gelenkpfanne (18) mündet, verschiebbar angeordnet ist, und daß das Sperrorgan (68) zur Anlage an den Gelenkkopf (24) bringbar ist.

12. Energieführungskette nach Anspruch 11, **dadurch gekennzeichnet, daß** der kanalförmige Halter (69) im wesentlichen quer zur Längserstreckung des Zentralkörpers (66) ausgebildet ist.

13. Energieführungskette nach Anspruch 11 oder 12, **dadurch gekennzeichnet, daß** der kanalförmige Halter (69) sich durch wenigstens einen Steg (5, 6) und die mit dem Steg (5, 6) verbundene Wandung (7, 8) hindurch erstreckt.

14. Energieführungskette nach einem der Ansprüche 11 bis 13, **dadurch gekennzeichnet, daß** der Gelenkkopf (24) wenigstens eine Anlagefäche (70) aufweist, an die das Sperrorgan (68) zur Anlage bringbar ist.

15. Energieführungskette nach Anspruch 1, wobei die Gelenkverbindung durch eine in einem Endbereich eines Zentralkörpers (83) ausgebildete Gelenkpfanne (18) und einen an einem Endbereich eines benachbarten Zentralkörpers (83) ausgebildeten Gelenkkopfes (24), der teilweise von der Gelenkpfanne (18) umgeben ist, ausgebildet ist, **dadurch gekennzeichnet, daß** der Gelenkkopf (24) in einer ersten Stellung der Kettenglieder (82) in der Gelenkpfanne (18) und in einer zweiten Stellung in einer der Gelenkpfanne (18) nachgeordneten Gelenkkopfaufnahme (84) angeordnet ist, daß zwischen der Gelenkpfanne (18) und der Gelenkkopfaufnahme (84) ein Durchlaß (85) ausgebildet ist, dessen lichte Querschnittsfläche kleiner ist als die maximale Querschnittsfläche des Gelenkkopfes (24), und daß die zwei benachbarten Kettenglieder (75; 82) so zueinander verschieblich sind, daß in der ersten Stellung die Kettenglieder (75; 82) voneinander beabstandet sind und in der zweiten Stellung die Kettenglieder (75; 82) aneinander liegen und sich gegenseitig sperren.

16. Energieführungskette nach Anspruch 1, wobei die Gelenkverbindung durch eine in einem Endbereich eines Zentralkörpers (76) ausgebildete Gelenkpfanne (18) und einen an einem Endbereich eines benachbarten Zentralkörpers (76) ausgebildeten Gelenkkopfes (24), der teilweise von der Gelenkpfanne (18) umgeben ist, ausgebildet ist, **dadurch gekennzeichnet, daß** ein Verbindungselement (77), das an einem Ende den Gelenkkopf (24) aufweist und das an dem Gelenkkopf (24) gegenüberliegende Ende mit dem Zentralkörper (76) verbunden ist, wobei das Verbindungselement (77) und der Zentralkörper (76) relativ zueinander verschiebbar und so miteinander verriegelbar sind, daß die benachbarten Kettenglieder (75) in der ersten Stellung voneinander beabstandet sind und in der zweiten Stellung die Kettenglieder (75) wenigstens teilweise aneinander liegen und sich gegenseitig sperren.

17. Energieführungskette nach Anspruch 16, **dadurch gekennzeichnet, daß** das Verbindungselement (77) wahlweise in Eingriff mit einem von wenigstens zweien Vorsprüngen (79, 80) bringbar ist, die quer zur Längsrichtung des Zentralkörpers (76) ausgebildet und in Längsrichtung voneinander beabstandet sind.

18. Energieführungskette nach Anspruch 17, **dadurch gekennzeichnet, daß** die Vorsprünge (79, 80) in einer sich in Längsrichtung des Zentralkörpers (76) erstreckenden Öffnung ausgebildet sind.

19. Energieführungskette nach Anspruch 17 oder 18, **dadurch gekennzeichnet, daß** die Vorsprünge (79, 80) umlaufend ausgebildet sind.

20. Energieführungskette nach Anspruch 17, 18 oder 19, **dadurch gekennzeichnet, daß** das Verbindungselement (77) Rastnasen (78) zur Anlage an die Vorsprünge (79, 80) aufweist.

21. Energieführungskette nach Anspruch 20, **dadurch gekennzeichnet, daß** wenigstens eine Rastnase (78) an wenigstens einem federnden Abschnitt (81) des Verbindungselementes (77) ausgebildet ist.

22. Energieführungskette nach Anspruch 16, **dadurch gekennzeichnet, daß** der wenigstens eine Steg (5, 6) an einem Ringelement (54) angeordnet, insbesondere angeformt, ist, und das Ringelement (54) mit dem Zentralkörper (53, 63, 71, 76, 83) verbindbar ist, daß eine Stirnfläche (67) des Ringelementes (54) wenigstens teilweise auf einem an einem Außenmantel (64) des Zentralkörpers (63, 71, 76, 83) ausgebildeten Kragen (66) aufliegt, wobei der Zentralkörper (63, 71, 76, 83) und/oder das Ringelement (54) wenigstens eine federnde Raste (72) aufweist, die mit dem Ringelement bzw. mit dem Zentralkörper in Eingriff bringbar ist.

23. Einrichtung nach Anspruch 22, **dadurch gekennzeichnet, daß** der Zentralkörper (53, 63, 71, 76, 83) durch zwei Schalen (56, 57) gebildet ist.

24. Einrichtung nach Anspruch 23, **dadurch gekennzeichnet, daß** die Schalen (56, 57) über ein Filmscharnier miteinander gelenkig verbunden sind.

## Claims

1. Energy guiding chain for statically guiding conduits, with moveable chain elements (2, 3, 4, 41, 47, 52, 62, 75, 82), that comprise respectively at least one guide portion (31) that extends in the longitudinal direction of the energy guiding chain (1, 40, 46, 61, 74, 80), which guide portion is limited by at least one wall (7, 8), that is connected through at least one bar (5, 6) to a central body (11, 12, 13, 42, 48, 53, 63, 71, 76, 83), wherein the adjacent chain elements (2, 3, 4, 41 47, 52, 62, 75, 82) are deflectable spatially relative to one another by hinge connections (9, 10), **characterized in that** at least two chain elements (2, 3, 4, 41, 47, 52, 62, 75, 82) are connectable to each other in a rigid, projecting way with help of at least one locking member (27, 30, 39, 49, 60, 68).

2. Energy guiding chain according to claim 1, **characterized in that** at least one rigid locking member (30) is connectable with the respective wall (7, 8) of at least two chain elements (2, 3, 4, 41).

3. Energy guiding chain according to claim 2, **characterized in that** the wall (7, 8) comprises at least one holder (28, 29) for receiving the locking member (30).

4. Energy guiding chain according to claim 3, **characterized in that** the holder (28, 29) is provided on an outside of the wall (7, 8).

5. Energy guiding chain according to one of the claims 1 to 4, **characterized in that** the locking member (30) is provided to be bar-shaped.

6. Energy guiding chain according to claim 1, **characterized in that** two adjacent central bodies (11, 12, 13, 42, 48, 53, 63) are connectable rigidly with each other with help of a locking member (27, 39, 49, 60, 68).

7. Energy guiding chain according to claim 6, **characterized in that** each central body (11, 12, 13, 42, 48, 53, 63) comprises at least one holder (37, 38, 69) for fixing at least one locking member (27, 39, 49, 60, 68).

8. Energy guiding chain according to claim 7, **characterized in that** the holder (38, 39, 69) is provided at the central body (11, 12, 13, 42, 48, 53, 63).

9. Energy guiding chain according to claim 1, **characterized in that** at least two holders (28, 29) are provided to be aligned.

10. Energy guiding chain according to claim 9, **characterized in that** the holder (28, 29) comprises at least one holding groove.

11. Energy guiding chain according to claims 6, 7 or 8, wherein the hinge connection (9, 10) is formed by a joint socket (18, 19, 20, 21) that is provided in an end region of a central body (11, 12, 13, 42, 48, 53, 63, 71, 76, 83), and a joint head (24, 25, 26, 36), that is provided in an end region of an adjacent central body (11, 12, 13, 42, 48, 53, 63, 76, 83), the joint head being embraced partially by the joint socket (18, 19, 20, 21), **characterized in that** the locking member (68) is arranged to be translatable in a channel shaped holder (69), that ends in the joint socket (18), and that the locking member (68) can be brought into contact with the joint head (24).

12. Energy guiding chain according to claim 11, **characterized in that** the channel shaped holder (69) is provided to be essentially traverse to the longitudinal extension of the central body (66).

13. Energy guiding chain according to claim 11 or 12, **characterized in that** the channel shaped holder (69) extends through at least one bar (5, 6) and the wall (7, 8) that is connected to the bar (5, 6).

14. Energy guiding chain according to one of claims 11 to 13, **characterized in that** the joint head (24) comprises at least one contact surface (70), to which the locking member (68) can be brought into contact.

15. Energy guiding chain according to claim 1, wherein the hinge connection is formed by a joint socket (18), that is formed in an end region of the central body (83), and a joint head (24), that is formed in an end region of the adjacent central body (83), the joint head (24) being partially embraced by the joint socket (18), **characterized in that** the joint head (24) is arranged in a first position of the chain element (82) in the joint socket (18) and in a second position in a joint head receiving means (84) that is arranged behind the joint socket (18), that an opening (85) is arranged between the joint socket (18) and the joint head receiving means (84), the internal cross sectional area of the opening being smaller than the maximum cross sectional area of the joint head (24), and that the two adjacent chain elements (75, 82) are translatable to each other such that in a first position the chain elements (75, 82) are displaced from each other and in a second position the chain elements (75, 82) are in contact and lock themselves mutually.

16. Energy guiding chain according to claim 1, wherein the hinge connection is formed by a joint socket (18), that is formed in an end region of a central body (76), and a joint head (24), that is formed in an end region of an adjacent central body (76), the joint head (24) being partially embraced by the joint socket (18), **characterized by** an connecting element (77) that comprises the joint head (24) at one end and that is connected at the end opposite to the joint head (24) with the central body (76), wherein the connecting element (77) and the central body (76) are translatable relative to one another and are lockable with each other such that in a first position the adjacent chain elements (75) are displaced from each other and in a second position the chain elements (75) are at least in partial contact and lock themselves mutually.

17. Energy guiding chain according to claim 16, **characterized in that** the connecting element (77) can be optionally brought into engagement with at least one of two projections (79, 80), that are formed transverse to the longitudinal direction of the central body (76) and are displaced from each other in the longitudinal direction.

18. Energy guiding chain according to claim 17, **characterized in that** the projections (79, 80) are formed in an opening that extends in the longitudinal direction of the central body (76).

19. Energy guiding chain according to claim 17 or 18, **characterized in that** the projections (79, 80) are formed in a peripheral way.

20. Energy guiding chain according to claim 17, 18 or 19, **characterized in that** the connecting element (77) comprises snap noses (78) to contact the projections (79, 80).

21. Energy guiding chain according to claim 20, **characterized in that** at least one snap nose (78) is arranged at at least one elastic section (81) of the connecting element.

22. Energy guiding chain according to claim 16, **characterized in that** the at least one bar (5, 6) is arranged at a ring element (54), particularly being formed thereon, and that the ring element (54) is connectable with the central body (53, 63, 71, 76, 83), that an end face (67) of the ring element (54) bears at least partially against a collar (66) provided on an outside peripheral surface (64) of the central body (63, 71, 76, 83), wherein the central body (63, 71, 76, 83) and/or the ring element (54) comprises at least one elastic retaining means (72), that can be brought into engagement with the ring element or with the central body respectively.

23. Apparatus according to claim 22, **characterized in that** the central body (53, 63, 71, 76, 83) is formed by at least two shell portions (56, 57).

24. Apparatus according to claim 23, **characterized in that** the shell portions (56, 57) are hingedly connected together by a film hinge.

## Revendications

1. Chaîne de transmission d'énergie pour le guidage stationnaire de conduites, comportant des maillons de chaîne amovibles (2, 3, 4, 41, 47, 52, 62, 75, 82) qui présentent respectivement au moins une section de guidage (31) s'étendant en direction longitudinale de la chaîne de transmission d'énergie (1, 40, 46, 61, 74, 80), ladite section de guidage (31) étant limitée par au moins une paroi (7, 8) qui à l'intermédiaire d'au moins une entretoise (5, 6) est reliée à un corps central (11, 12, 13, 42, 48, 53, 63, 71, 76, 83), les maillons de chaîne adjacents (2, 3, 4, 41, 47, 52, 62, 75, 82) étant déviables de manière spatiale relativement l'un par rapport à l'autre au moyen de joints d'articulation (9, 10), **caractérisée en ce que** cependant au moins deux maillons de chaîne (2, 3, 4, 41, 47, 52, 62, 75, 82) peuvent être reliés en alignement de manière raide au moyen d'au moins un organe de verrouillage (27, 30, 39, 49, 60, 68).

2. Chaîne de transmission d'énergie selon la revendication 1, **caractérisée en ce qu'**au moins un organe de verrouillage raide (30) peut être relié à la paroi respective (7, 8) d'au moins deux maillons de chaîne (2, 3, 4, 41).

3. Chaîne de transmission d'énergie selon la revendication 2, **caractérisée en ce que** la paroi (7, 8) présente au moins une retenue (28, 29) pour recevoir l'organe de verrouillage (30).

4. Chaîne de transmission d'énergie selon la revendication 3, **caractérisée en ce que** la retenue (28, 29) est réalisée sur un coté extérieur de la paroi (7, 8).

5. Chaîne de transmission d'énergie selon l'une des revendications 1 à 4, **caractérisée en ce que** l'organe de verrouillage (30) est réalisé en forme de barre.

6. Chaîne de transmission d'énergie selon la revendication 1, **caractérisée en ce que** deux corps centraux adjacents (11, 12, 13, 42, 48, 53, 63) peuvent être reliés l'un à l'autre de manière raide au moyen d'un organe de verrouillage (27, 39, 49, 60, 68).

7. Chaîne de transmission d'énergie selon la revendication 6, **caractérisée en ce que** chaque corps central (11, 12, 13, 42, 48, 53, 63) présente au moins une retenue (37, 38, 69) pour la fixation d'au moins un organe de verrouillage (27, 39, 49, 60, 68).

8. Chaîne de transmission d'énergie selon la revendication 7, **caractérisée en ce que** la retenue (38, 39, 69) est réalisée sur le corps central (11, 12, 13, 42, 48, 53, 63).

9. Chaîne de transmission d'énergie selon la revendication 1, **caractérisée en ce qu'**au moins deux retenues (28, 29) sont réalisées en alignement.

10. Chaîne de transmission d'énergie selon la revendication 9, **caractérisée en ce que** la retenue (28, 29) présente au moins une rainure de retenue.

11. Chaîne de transmission d'énergie selon la revendication 6, 7 ou 8, où le joint d'articulation (9, 10) est réalisé par une cavité articulaire (18, 19, 20, 21), réalisée dans une zone d'extrémité d'un corps central (11, 12, 13, 42, 48, 53, 63, 71, 76, 83) et par une tête de joint articulée (24, 25, 26, 36) réalisée sur une zone d'extrémité d'un corps central adjacent (11, 12, 13, 42, 48, 53, 63, 76, 83) et entourée partiellement par la cavité articulaire (18, 19, 20, 21), **caractérisée en ce que** l'organe de verrouillage (68) est agencé de manière coulissante dans une retenue en forme de canal (69), qui débouche dans la cavité articulaire (18) et **en ce que** l'organe de verrouillage (68) peut être amené en butée contre la tête de joint articulée (24).

12. Chaîne de transmission d'énergie selon la revendication 11, **caractérisée en ce que** la retenue en forme de canal (69) est réalisée sensiblement transversalement à l'étendue longitudinale du corps central (66).

13. Chaîne de transmission d'énergie selon la revendication 11 ou 12, **caractérisée en ce que** la retenue en forme de canal (69) s'étend à travers au moins une entretoise (5, 6) et à travers la paroi (7, 8) reliée à l'entretoise (5, 6).

14. Chaîne de transmission d'énergie selon l'une des revendications 11 à 13, **caractérisée en ce que** la tête de joint articulée (24) présente au moins une surface de butée (70), contre laquelle l'organe de verrouillage (68) peut être amené en butée.

15. Chaîne de transmission d'énergie selon la revendication 1, où le joint d'articulation est réalisé par une cavité articulaire (18), réalisée dans une zone d'extrémité d'un corps central (83) et par une tête de joint articulée (24) réalisée sur une zone d'extrémité d'un corps central adjacent (83) et entourée partiellement par la cavité articulaire (18), **caractérisée en ce que** la tête de joint articulée (24) est agencée en une première position des maillons de chaîne (82) dans la cavité articulaire (18) et en une deuxième position dans un logement de tête de joint articulée (84) agencé en aval de la cavité articulaire (18), **en ce qu'**entre la cavité articulaire (18) et le logement de tête de joint articulée (84) un passage (85) est réalisé dont l'aire de section intérieure est plus petite que l'aire de section maximale de la tête de joint articulée (24), et **en ce que** les deux maillons de chaîne adjacents (75 ; 82) sont coulissants l'un par rapport à l'autre de telle manière que dans la première position les maillons de chaîne (75 ; 82) sont à distance l'un de l'autre et que dans la deuxième position le maillons de chaîne (75 ; 82) sont disposés l'un contre l'autre et se verrouillent réciproquement.

16. Chaîne de transmission d'énergie selon la revendication 1, où le joint d'articulation est réalisé par une cavité articulaire (18), réalisée dans une zone d'extrémité d'un corps central (76) et par une tête de joint articulée (24) réalisée sur une zone d'extrémité d'un corps central adjacent (76) et entourée partiellement par la cavité articulaire (18), **caractérisée en ce qu'**à une extrémité un élément de liaison (77) présente la tête de joint articulée (24) et que l'extrémité située en vis-à-vis sur la tête de joint articulée (24) est reliée au corps central (76), l'élément de liaison (77) et le corps central (76) étant coulissants relativement l'un par rapport à l'autre et pouvant être verrouillés l'un avec l'autre de telle manière que les maillons de chaîne adjacents (75) sont à distance l'un de l'autre dans la première position et que les maillons de chaîne (75) sont disposés au moins partiellement l'un contre l'autre dans la deuxième position et se verrouillent réciproquement.

17. Chaîne de transmission d'énergie selon la revendication 16, **caractérisée en ce que** l'élément de liaison (77) peut être amené à engrener avec une d'au moins deux saillies (79, 80), qui sont réalisées transversalement à la direction longitudinale du corps central (76) et qui en direction longitudinale sont à distance l'une de l'autre.

18. Chaîne de transmission d'énergie selon la revendication 17, **caractérisée en ce que** les saillies (79, 80) sont réalisées dans une ouverture s'étendant en direction longitudinale du corps central (76).

19. Chaîne de transmission d'énergie selon la revendication 17 ou 18, **caractérisée en ce que** les saillies (79, 80) sont réalisées de façon à faire le tour.

20. Chaîne de transmission d'énergie selon la revendication 17, 18 ou 19, **caractérisée en ce que** l'élément de liaison (77) présente des protubérances d'arrêt (78) pour l'application contre les saillies (79, 80).

21. Chaîne de transmission d'énergie selon la revendication 20, **caractérisée en ce qu'**au moins une protubérance d'arrêt (78) est réalisée sur une section résiliente (81) de l'élément de liaison (77).

22. Chaîne de transmission d'énergie selon la revendication 16, **caractérisée en ce que** l'au moins une entretoise (5, 6) est agencée, notamment formée, sur un élément annulaire (54) et que l'élément annulaire (54) peut être relié au corps central (53, 63, 71, 76, 83) et **en ce qu'**une face frontale (67) de l'élément annulaire (54) repose au moins partiellement sur un col (66) réalisé sur une enveloppe extérieure (64) du corps central (63, 71, 76, 83), le corps central (63, 71, 76, 83) et/ou l'élément annulaire (54) présentant au moins un cran d'arrêt résilient (72) qui peut être amené à engrener avec l'élément annulaire respectivement avec le corps central.

23. Installation selon la revendication 22, **caractérisée en ce que** le corps central (53, 63, 71, 76, 83) est formé par deux coquilles (56, 57).

24. Installation selon la revendication 23, **caractérisée en ce que** les coquilles (56, 57) sont reliées l'une à l'autre de manière articulée au moyen d'une charnière film.
